# EUROPEAN PATENT SPECIFICATION

(11) **EP 2 474 902 B1**
(45) Date of publication and mention of the grant of the patent: **07.01.2015**
(21) Application number: 11188757.6
(22) Date of filing: 11.11.2011
(51) Int. Cl.: G06F 3/05

(54) **Signal processing apparatus for encoders**
Signalverarbeitungsvorrichtung für Kodierer
Appareil de traitement de signal pour codeurs

(30) Priority: 07.01.2011 JP 2011001938
(43) Date of publication of application: 11.07.2012
(73) Proprietor: Dr. Johannes Heidenhain GmbH, 83301 Traunreut (DE)
(72) Inventor: Fukui, Toyoji, Tokyo 192-0363 (JP)

(56) References cited:
- US-A1- 2011 202 308
- US-B1- 6 307 594

## Description

This invention concerns an apparatus and a method for signal processing for encoders which is used in measuring the relative positions of objects which can move with respect to each other, in particular, for measuring the positions of machining and processing devices.

In machining equipment, accurately measuring the relative amount of motion of tools with respect to the objects being machined is extremely important for performing precision work, and various measurement apparatus have been produced for this purpose.

As such measuring devices, rotary encoders, in which detectors are placed on scales which are linked to drive devices and drive mechanisms, and linear encoders, which detect absolution positions by means of detectors which move relatively on scales, are known. As an example of a conventional linear encoder, a linear encoder which contains a measurement scale in a rectangular tubular case will be explained. The linear encoder has a housing which encloses the measuring scale and an encoder head which runs along the scale which is enclosed in this housing and is connected to a sensing unit, which obtains the positional information. Furthermore, the housing may be omitted in some embodiments of use.

The details of such rotary and linear encoders are provided in many references. For example, the general constitution of rotary encoders is disclosed in Japanese Patent Application No. 2005-249571 (Patent Reference 1), and the general constitution of linear encoders is disclosed in Japanese Patent Applications Nos. 2003-130687 (Patent Reference 2) and 2003-121208 (Patent Reference 3).

The measurement data from such encoders are ordinarily converted into serial signals, for each encoder, and outputted. The reason for using serial signals is that it is not necessary to transmit large volumes of data and the number of signal lines can be reduced.

US 2011/0202308 A1 describes an encoder system and a signal processing method. A signal processing apparatus converts the detection signals of two position encoders into serial data signals, and synthesizes these data signals into a synthesized data signal, which represents a combined position data. The combined position data represents the rotation count and angular position of an input shaft 10.

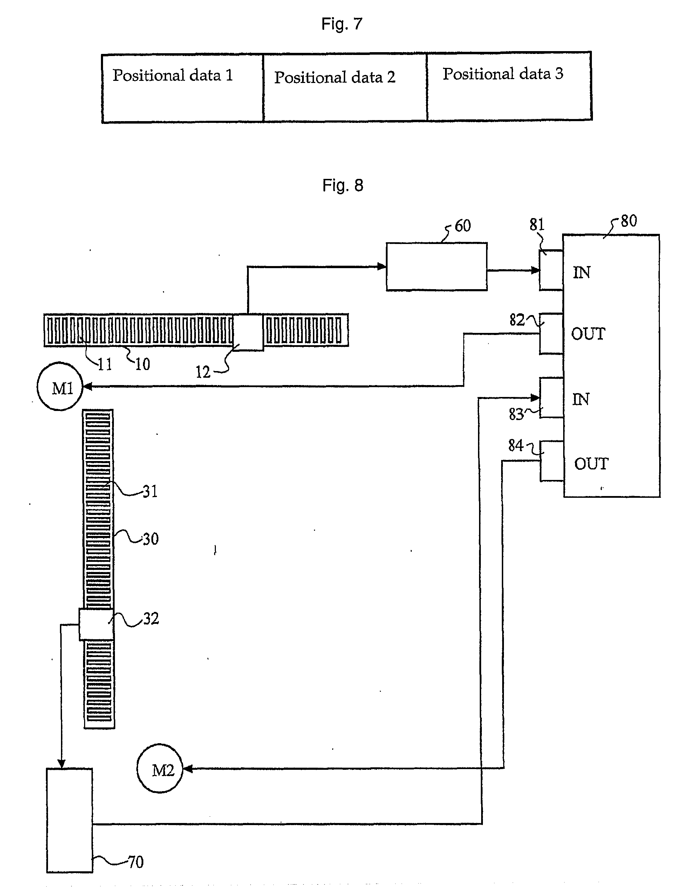

An example of a signal processing apparatus of a conventional encoder is shown in Fig. 8. In this example, a constitution is shown which is applied to the control of an X-Y table, such as an automatic cutting machine. The apparatus shown in the drawing has a scale 10, on which a pattern 11 is engraved with a specific pitch for controlling in the X direction, and an encoder head 12 which moves on this scale 10 and reads this pattern. The pattern detection signals read from this encoder head are sent to an encoded signal processor 60 as two sine wave signals with a phase difference, as described in the references mentioned above, and transformed into data signals of positional information. These data signals are sent to the input port 81 of a motor controller 80 in the form of serial signals, as mentioned above. Through the output port 82, the motor controller 80 actuates a motor M1 for driving the X axis in a specific device by a distance equal to the difference between the positional data obtained and the position it should move to. Furthermore, this apparatus is constituted in such a way that, even while this movement is taking place, the updated positional data are read and the optimum movement control is performed.

Moreover, the control in the Y direction in this drawing is performed in the same way: the apparatus has a scale 30 on which a pattern 31 for control in the Y direction is engraved, an encoder head 32, and an encoded signal processor 70, and this encoded signal processor 70 sends the data signals to the input port 83 of the motor controller 80 and the motor M2 is controlled through the output port 84 in the same manner as described above. Thus, the motor controller 80 is ordinarily provided with a pair of input (81) and output (82) ports and another pair of input (83) and output (84) ports, for a total of 4 input and output ports. This constitution of the input and output ports of the motor controller is the general embodiment for controlling this X-Y table, and is employed in many devices which are currently in widespread use.

In recent years, however, higher-precision machining has been required in machining equipment. This is because, in order to cope with the requirements for further reductions in the cost of machined parts, machine working is also being required to be applied products which were formerly processed by skilled workers. To perform such highly precise machining, the approach of providing higher analytic functions by means of the scale patterns and the heads has been considered, but there are limits to the highly precise machining which can be obtained in this way by itself. One reason for this is that there are variables which vary outside the direction which can be measured and controlled on one axis. This is due to the mechanical accuracy of the movement axes, rails, etc.; such variables are minute, but the higher the resolution of the encoder, the larger are the errors which appear in the measurement data. In the case of linear bearings, for example, these variables are known as the pitch (the vertical oscillations), the yaw (the left and right oscillations), and the roll (the rotational oscillations) components, as well as the straightness. Therefore, the precisions could be further improved if these variable components could be detected.

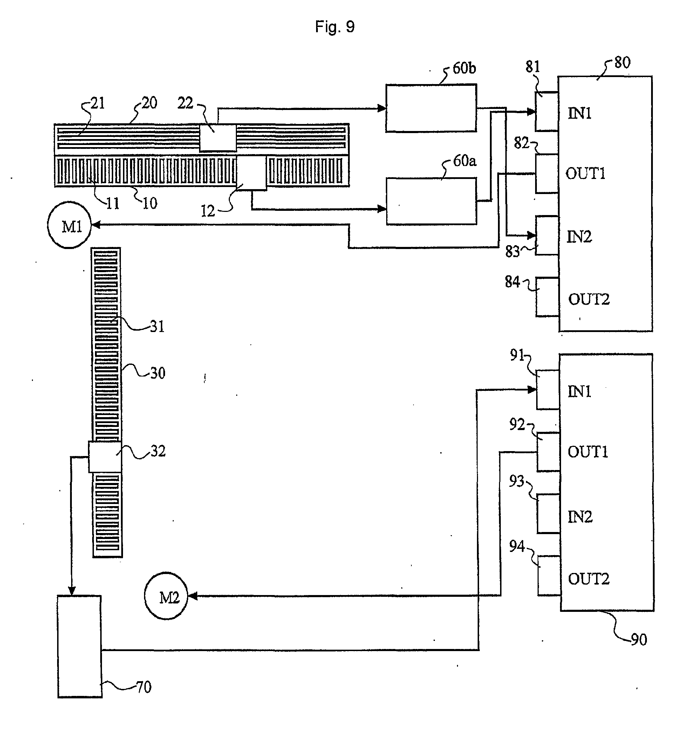

From this point of view, the applicant proposed the highly precise encoder system shown in Fig. 9. The encoder in this drawing is provided with a sub-scale 20 which measures minute displacements in the Y direction which are orthogonal to the X direction in addition to the main scale 10, which measures the amount of movement in the X direction. The constitution of the main scale is the same as above, and the explanation of the elements of this constitution which are given the same numbers as above will be omitted, aside from labeling the encoded signal processor "60a." A grid (engraved lines) perpendicular to the grid (engraved lines) engraved on the main scale 10 is engraved on this sub-scale 20. Moreover, an encoder head 22 is provided, in the same way as for the main scale 10, and the detected signals are sent to the input port 83 of the motor controller as movement data 80 through the encoded signal processor 60b.

In a system with this constitution, since the signals from the encoder head 12 of the main scale 10 and the encoder head 22 of the sub-scale 20 are converted and the data are inputted into the controller 80, two systems of devices and ports, the encoded signal processors 60a and 60b and the input ports 81 and 83, are necessary. Since the motor controllers which are generally commercially available are thus provided with two input ports and two output ports, one motor controller is occupied with the control system for the X axis alone, and a separate motor controller must be furnished to control the Y axis.

When a system is formed which requires unusual or extra inputs and outputs like this, the cost is greatly increased if the conventional kind of products are used. On the other hand, if specialized controllers are made, a considerable development cost must be paid and it is difficult to lower the manufacturing cost by mass production, since they are specialized products; thus, increased costs cannot be avoided in any case.

Furthermore, in Japanese Unexamined Patent Application No. 04-342010 (Patent Reference 4), a sensor controller is disclosed in which, after one of a plurality of analog data sensors is selected with a multiplexer, the data are A/D-converted and the A/D-converted digital signals are made into serial signals and sent to the main control part. However, since this reference is concerned with a technology related to the acceptance of sensor data in a digital controller, it is different from the technology which relates to the data transmission of an encoder. Furthermore, this technology only deals with the selection of analog signals from a sensor by a multiplexer; it does not describe or suggest the integration of a plurality of data signals.

The problems which are to be solved are, first, to provide a signal processing apparatus for encoders which can respond easily and at low cost to encoders which are made to function with high precision and high resolution and in systems which have unusual or extra kinds of inputs and outputs.

Furthermore, a signal processing apparatus for encoders must be provided which does not require developing a new control apparatus and can solve the problem with only slight modifications of the existing apparatus.

These problems are solved with a signal processing apparatus for encoders according to independent claim 1.

When detection signals from a plurality of encoder heads or detectors are processed, if the plurality of signals can be synthesized and transmitted as one signal after being converted to data signals, the signals from a plurality of systems can be received in one port and an existing motor controller can be used without modification. The processing of the received signals can be easily dealt with by making slight alterations, such as changing the software in the motor controller.
(1) A signal processing apparatus for encoders which converts the detection signals from a plurality of encoders, synthesizes the plurality of data signals obtained, and transmits them as one synthesized data signal.
(2) A signal processing apparatus for encoders of (1) above in which the aforementioned data signals are serial signals.
(3) A signal processing apparatus for encoders of (1) or (2) above in which the aforementioned synthesized data signals consist of a plurality of data signals which are joined together and arranged consecutively.
(4) A signal processing apparatus for encoders of any of (1)-(3) above which has a plurality of data signal converting parts which convert the detection signals into data signals; a plurality of serial signal producing parts which convert the data signals from the data signal converting parts into serial signals; a signal synthesizing part which synthesizes the data signals from the aforementioned serial signal producing parts; and a signal transmission part which transmits the serial data signals synthesized in the aforementioned signal synthesizing part to an external apparatus.
(5) A signal processing apparatus for encoders of any of (1)-(4) above in which the aforementioned plurality of encoders have main scales which measure the quantities of movement in the main measurement directions and sub-scales which detect the quantities of variation in the directions orthogonal to the aforementioned main measurement directions.

The signal processing apparatus for encoders of this invention has the advantage that it provide a signal processing apparatus for encoders which can respond easily and at low cost to encoders which are made to function with high precision and high resolution and in systems which have unusual or extra kinds of inputs and outputs.
Fig. 1: Block diagram showing the constitution of a signal processing apparatus for encoders
Fig. 2: Schematic drawing showing the constitution of an example of the synthesized data signals synthesized by the apparatus of this invention
Fig. 3: Schematic drawing showing an embodiment in which a signal processing apparatus for encoders is used (Working Example 1)
Fig. 4: Block diagram showing a specific constitution of a signal processing apparatus for encoders (Working Example 1)
Fig. 5: Schematic drawing showing the constitution of an example of the serial signals handled by the apparatus of this invention (Working Example 1)
Fig. 6: Schematic drawing showing another embodiment in which a signal processing apparatus for encoders is used (Working Example 2)
Fig. 7: Schematic drawing showing the constitution of an example of the synthesized data signals synthesized in Working Example 2
Fig. 8: Schematic drawing showing the constitution of an example of a system using the signal processing circuit of an encoder of the prior art
Fig. 9: Schematic drawing showing the constitution of another example of a system using the signal processing circuit of an encoder of the prior art

The signal processing apparatus for encoders of this invention converts the detection signals from a plurality of encoders, synthesizes the plurality of data signals obtained, and transmits them as one synthesized data signal.

In this way, it becomes possible to transmit the signals of two or more encoders with one port of the device which receives the signals, for example, a motor controller, by transmitting the detection signals from a plurality of encoders as one data signal, and the number of encoders which can do the inputting can be increased without increasing the number of input ports. Therefore, systems which use an unusual number of encoders, different from existing systems, or encoders with increased outputs because they are made to function at a higher level or more precisely can be easily accommodated with the existing apparatus.

The encoders in this invention are not particularly limited as long as they can measure quantities of movement or displacement of the measured objects and output encoded signals; they may be of the rotary type or the linear type. In linear encoders, in particular, the necessity arises of dealing with several different detection directions, as mentioned above. Moreover, the methods of detection of the encoders or the modes of data output are not particularly limited, either; they may be optical, magnetic, or electromagnetic induction types, and the modes of the outputted data may be incremental or absolute.

The encoder of this invention is provided, at least, with a signal plate, on which a scale for producing symbols (signals), engraved lines, or symbol patterns is placed, and a detector for detecting this pattern which is placed on this signal plate. If the encoder is a rotary encoder, the signal plate has a symbol pattern on a rotating circular plate; if it is a linear encoder, the symbol pattern or engraved lines are placed on a scale. If the detector is of the optical type, it is provided with a light source which emits the light which reads the pattern and an optical detection element which detects the light reflected from the light source on the signal plate or the light passing through the signal plate. For the magnetic or induction type, also, signal plates or wiring base plates and elements, etc., of well-known types for producing the symbol signals are provided in the same way.

Desirable constitutions of the linear encoders used in this invention are ones which conform to generally used linear encoders, including optical encoders.

Optical encoders have, for example, a main scale, on which a grid (engraved lines) in which transparent and opaque parts are arranged with a specific pitch on one side of a reflective glass scale and an index scale, on which a grid (engraved lines) in which transparent and opaque parts are arranged with a specific pitch on one side of a transparent glass placed on the surface of the sensor part; the main scale and index scale are placed opposite each other with a very small gap between them, and the grid of the index scale is arranged in such a way that it is inclined at a slight angle to the grid of the main scale.

Moreover, when the lattice moves by one pitch, the moire bands are displaced by the interval of the bands and the change of the permeating or reflected light of the slits in the interval is read; in this way, the amount of movement of one pitch can be measured precisely.

The sensor unit which serves as the detector has a sensor part, which has a glass scale and an opposing index scale, on which a grid (engraved lines) are placed, and an optical sensor, as well as guide rollers, etc., for reducing the vibration of the glass scale slide. Furthermore, besides this constitution, one may also read the grid of the main scale without producing moire bands, and various modes which are known as optical methods may be selected.

The encoder head has a structure in which it is attached to a movable part, such as a machine tool, which is the object being measured, and contains a sensor unit and has a degree of freedom such that it can follow to a certain extent the variable movements of the object being measured. The scale is attached to a fixed part, a machine tool, etc., and the encoder head is attached to the movable part of the machine tool which is the object being measured. Moreover, the amount of movement of this movable part (displacement) is detected as the amount of relative movement of the glass scale and the sensor part of the sensor unit, which moves along this scale.

The detector of the encoder of this invention converts the pattern on the symbol plate into an electrical signal and outputs an analog signal, at least, in the manner described above. This analog signal detects the changes in the pattern of the symbol plate with the detection element, as mentioned above; therefore, the signal level varies corresponding to the pattern of the symbol plate. Ordinarily, this signal varies in the shape of a sine wave; by using various signal processing techniques, it can be converted into an internal phase signal or a square wave pulse signal. This detection signal is preferably two signals with a phase difference; it is especially desirable for it to be detected as two signals with a phase difference of 90 degrees. By using this kind of phase difference signal, the displacement or movement direction of the object being measured can be easily discriminated. The circuit for processing this signal can be constituted based on well known circuits which are described in the aforementioned references.

The detection signal obtained from the signal mentioned above is inputted into the signal processing apparatus of this invention. The inputted detection signal is subjected to an analog/digital conversion and a binary digital detection signal is obtained by waveform shaping. Ordinarily, this digital detection signal is processed by interpolation to increase its resolution, as needed, and converted into a signal for counting, by which the displacement or movement direction can be discriminated, and counted by a counter. Furthermore, the count signal of this counter is outputted as a positional data signal.

In the apparatus of this invention, a plurality of output signals from a plurality of encoders are inputted. These encoders may be related to each other or unrelated, but ordinarily the detection signals used as data of the same control system are inputted. The "same control system" means, for instance, a combination of data obtained from a main scale used for ordinary measurement and a sub-scale which measures displacements in a direction orthogonal to this. As mentioned above, a positional data signal is produced from a plurality of detection signals. The positional data signals produced are reconstituted into one signal by synthesizing them in the signal processing apparatus. The method of synthesizing the plurality of data signals is not particularly limited; two data signals may simply be arranged consecutively. By arranging them consecutively, the signal form can be made simple and the constitution of the device need not be complex. Moreover, they may be synthesized by using well known signal synthesizing means.

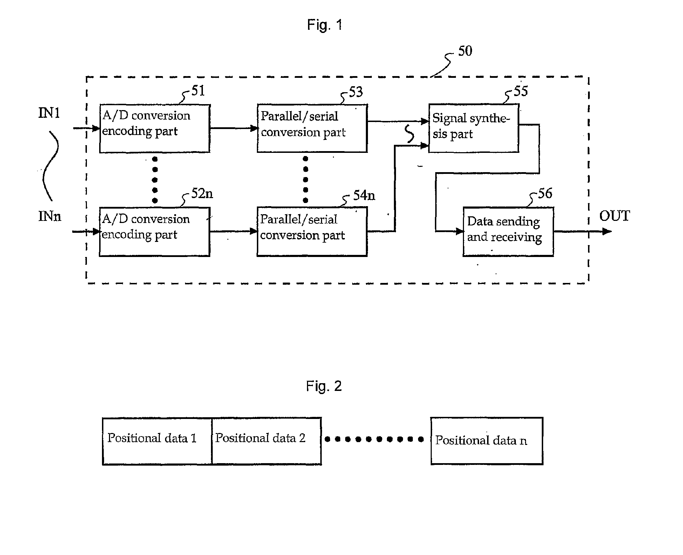

Next, a simpler constitution of the signal processing apparatus of this invention will be explained. Fig. 1 is a block diagram which shows the constitution of an example of a signal processing apparatus 50 of this invention. In this drawing, the signal processing apparatus 50 has an A/D conversion encoder part 51 which has a first data signal input IN1 and a parallel/serial conversion part 53 which is connected to this A/D conversion encoder part 51. The A/D conversion encoder part 51 represents the data signal conversion part which converts the detection signals to digital signals and the parallel/serial conversion part 53 represents the serial signal production part which converts the data signals from the data signal conversion part to serial signals.

Moreover, a plurality of similar constituent elements are provided in parallel: the nth (where n is a natural number 2 or larger) constituent elements are the A/D conversion encoder part 52n which has the nth data signal input INn and the parallel/serial conversion part 54n which is connected to this A/D conversion encoder part 52n. Moreover, the signal process apparatus has the signal synthesis part 55 into which the plurality of output signals from the aforementioned parallel/serial conversion part 53 to the nth parallel/serial conversion part 54n are inputted. Furthermore, it has a data sending and receiving part 56 into which the signals synthesized by this signal synthesis part 55 are inputted and which sends and receives signals with an external apparatus.

To explain these constituent elements, first, from the A/D conversion encoder part 51, which has the first data signal input IN1, n similar constitutions follow successively; the detection signals from the detectors of the various encoders, as shown in Fig. 1, are inputted into the nth (where n is a natural number 2 or greater) A/D conversion encoder part 52n which has the nth data signal input INn. Since the inputted detection signals are two analog phase difference signals in this working example, they are subjected to A/D conversion and converted into digital signals.. The two converted digital phase difference signals are subjected to various well known processes, as needed, in the same way as described above, and converted into data signals which express the positional information or displacement and movement quantities. Furthermore, the aforementioned A/D conversion encoder parts may be placed in the encoder heads.

Since the nth system of data signals obtained is ordinary a set of parallel signals, they are sent to the parallel/serial conversion part 53 to the parallel/serial conversion part 54n, respectively, and converted to serial data signals, which are suitable for transmission. The converted nth system of serial data signals are sent to the signal synthesis part 55 and synthesized into one synthesized data signal by being arranged consecutively by a desirable mode. Furthermore, the A/D conversion encoder parts and the parallel/series conversion parts may be made common ones by a time-sharing operation, etc.

The method of synthesizing the data is not particularly limited; the first data signal may be held in a first register or memory region, the nth data may be held in the nth register or memory region, and they may be read out successively and held in an (n+1)th or greater register or memory region, or they may be introduced into the transmission process described below as unchanged synthesized data. Fig. 2 shows an example of the data signals synthesized in this way. The signals shown in this example are arranged serially as the data signals 1, 2, ... n and synthesized as one data signal. The synthesis of the data is made simply by making the data into sequentially arranged serial data in this way. Furthermore, the synthesis of the data signals is not limited to this method; it may be modified in various ways.

The synthesized data signals are sent to the data sending and receiving part 56 and transmitted to an external apparatus, not shown in the drawing, by serial transmission. The data sending and receiving part 56 performs sending and receiving of signals with the external apparatus as necessary, sending and receiving the needed data and commands. Therefore, it is provided with the control elements, buffer elements, driver elements, etc., necessary for transmission, like well known transmission apparatus.

The synthesized data signals are sent to the apparatus which receives the data as one data signal, according to the conventional constitution. The mode of transmitting the data when they are sent and received is not particularly limited, but one may use a serial transmission means which is ordinarily employed in this kind of apparatus. When serial transmission is used, few transmission lines are needed, and the apparatus can be realized easily using existing elements and circuits. Its operation is also stable and high reliability is obtained. Furthermore, one can also use parallel transmission or wireless transmission, depending on the nature of the apparatus involved.

Various kinds of publicly known modes can be selected for communicating with the external apparatus, but serial transmission is desirable, as described above. Typical transmission protocols which can be used for the serial transmission are, for example, RS232, RS422, RS485, etc.; the transmission means with the optimum specifications can be selected from these.

Various kinds of apparatus can be used or selected for sending and receiving the data signals, depending on the purpose of use, mode of use, etc., but a motor controlling apparatus such as a motor controller, is especially recommended in this invention. The advantages of the apparatus of this invention can be fully employed when a motor controller which has a plurality of fixed input/output ports, such as the existing 2-input/2-output type, is used.

### Working Example 1

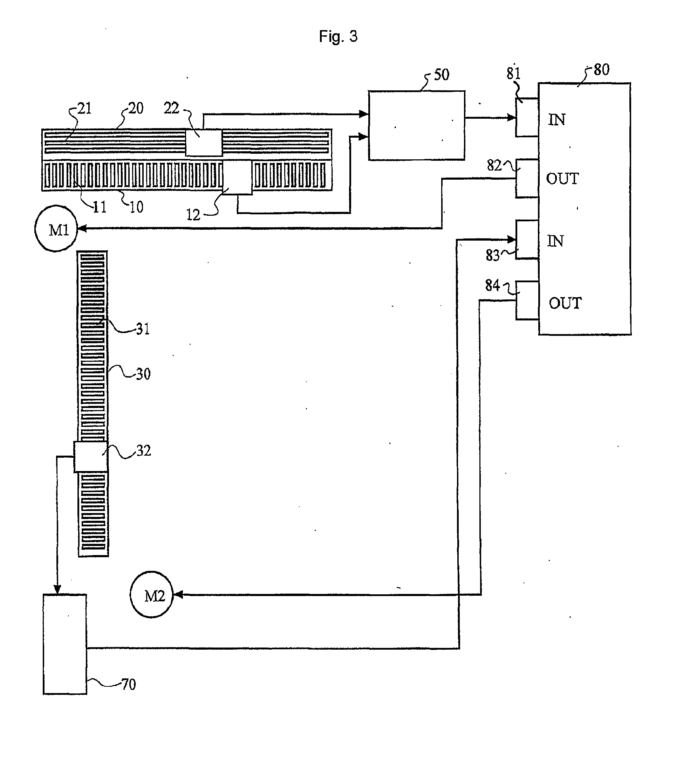

Next, more specific constitutions of the apparatus of this invention will be explained with reference to the drawings. Fig. 3 is a block drawing which shows one example of the constitution of the system which uses the signal processing apparatus of this invention. In this example, an example is shown in which, besides the main scale 10 which measures the quantity of movement of a device in the X direction, a sub-scale which measures the quantity of movement in the Y direction, orthogonal to the X direction is used for control on one axis of an X-Y table.

In the drawing, the X-Y table control system has a scale 10 on which a pattern 11 is engraved at a specific pitch for X direction control and an encoder head 12 which moves over this scale 10 and reads the pattern 11. The pattern detection signals which are read from this encoder head are sent to the signal processor 50 as two sine wave signals with a phase difference, as mentioned above.

Furthermore, the system shown in this drawing is provided with a sub-scale 20 which measures minute displacements in the Y direction, which is orthogonal to the X direction, in addition to the main scale 10, which measures the amount of movement in the X direction. A grid (engraved lines) 21 which is parallel to the longitudinal direction of the scale, which is perpendicular to the grid (engraved lines) engraved on the main scale 10, is engraved on this sub-scale 20. Moreover, an encoder head 22 is provided, in the same way as for the main scale 10, and the detected signals are sent to the signal processor 50 in the same manner as for the main scale.

The aforementioned two systems of detection signals inputted to the signal processor 50 are subjected to processing, including A/D conversion and waveform shaping, and converted to digitized signals. Moreover, as necessary they are processed by interpolation to increase the resolution and converted to count signals which can discriminate the direction of rotation, direction of displacement, and direction of movement, and a specific count processing is performed to produce positional data signals. Since the positional data signals obtained are ordinarily 8-bit, etc., parallel data signals, they are converted to serial data signals suitable for transmission. Moreover, the 2-system serial data signals are synthesized into one signal. The mode of synthesis used may be of various types, as mentioned above, but a desirable mode in this working example is to arrange the serial data consecutively and treat them as one data signal.

The synthesized data signals are sent to the input port 81 of a motor controller 80, in the same constitution as that of an existing system. The motor controller 80 extracts the original data signal by dividing the received data signal into portions of a specific bit length, for example, and uses them in the respective control systems. In this working example, the motor M1 for driving the X axis is actuated through the output port 82 by the difference between the position to be moved and the positional data of the X direction obtained from the main scale, moving the X axis to a specific position. At this time, the data for the Y direction are corrected by the displacement data for the Y direction obtained from the sub-scale. That is, the minute displacements in the Y direction are detected by the sub-scale placed together with the scale for controlling the X axis, and control can be performed using the more precise positional data in this way.

Moreover, the control in the Y direction is performed in the same way. The apparatus has a scale 30 on which a pattern 31 for control in the Y direction is engraved, an encoder head 32, and an encoded signal processor 70; this encoded signal processor 70 sends the data signals to the input port 83 of the motor controller 80 and the motor M2 is controlled through the output port 84 in the same manner as described above. That is, the minute displacements in the X direction can be detected by a sub-scale on this Y axis and the data of the X axis can also be corrected. Thus, the ordinary motor controller 80 is provided with a pair of input (81) and output (82) ports and another pair of input (83) and output (84) ports, for a total of 4 input and output ports. Even a constitution which has three encoders, as described above, can be accommodated with the one motor controller mentioned above.

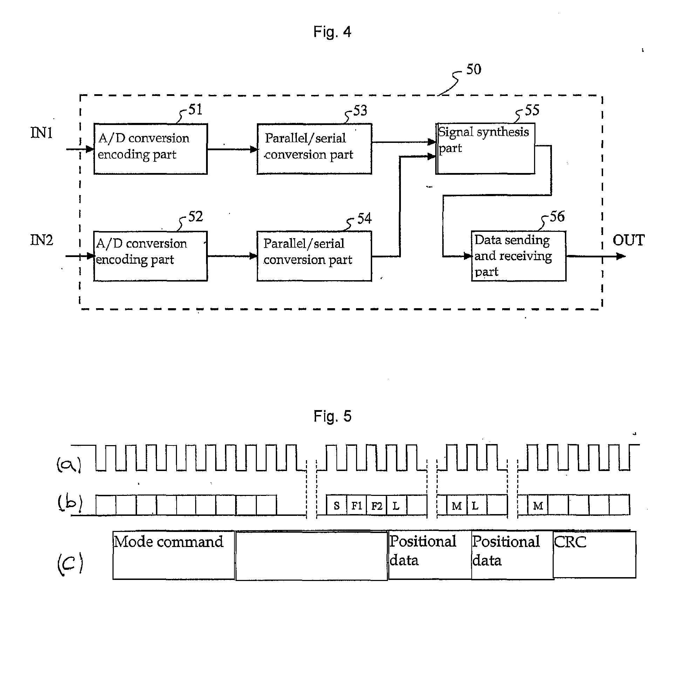

Next, a simpler constitution of the signal processing apparatus of this invention will be explained. Fig. 4 is a block diagram showing the constitution of an example of a signal processing apparatus 50 of this invention. In this drawing, the signal processing apparatus 50 has an A/D conversion encoder part 51 which has a first data signal input IN1, a parallel/serial conversion part 53 which is connected to this A/D conversion encoder part 51, an A/D conversion encoder part 52 which has a second data signal input IN2, and a parallel/serial conversion part 54 which is connected to this A/D conversion encoder part 52. Furthermore, it has a signal synthesis part 55 to which the two data signals of the aforementioned parallel/serial conversion parts 53 and 54 are inputted and data sending and receiving part 56 into which the signals synthesized by this signal synthesis part 55 are inputted and which sends and receives signals with an external apparatus.

To explain these constituent elements, first, the A/D conversion encoder part 51, which has the first data signal input IN1 and the A/D conversion encoder part 52 which has the second data signal input IN2 input the detection signals from the detectors of the various encoders, as shown in Fig. 4. Since the inputted detection signals are two analog phase difference signals in this working example, they are subjected to A/D conversion and converted into digital signals. The two converted digital phase difference signals are subjected to various well known processes, as needed, in the same way as described above, and converted into data signals which express the positional information or displacement and movement quantities.

Since the two-system data signals obtained are parallel signals, they are sent to the parallel/serial conversion parts 53 and 54, respectively, and converted to serial data signals, which are suitable for transmission. The two converted systems of converted serial data signals are sent to the signal synthesis part 55 and synthesized into one synthesized data signal by being arranged successively.

The synthesized data signals are sent to the data sending and receiving part 56 and transmitted to an external apparatus, not shown in the drawing, through a transmission cable by serial transmission.

Fig. 5 shows an example of a typical serial signal sent and received in the apparatus of this invention. In this drawing, (a) shows the clock, (b) the signal data, and (c) the contents of the data. In this example, the positional data are sent as single packets. For example, when data are requested from the external apparatus, the process starts at the falling clock edge. First, the positional data are read and stored, and the position is measured, if necessary. After this, a mode command is sent after a delay of 2 clock pulses, and after a further specific clock interval is interposed, a start bit (S), an error bit 1 (F1), and an error bit 2 (F2) are sent. After this, the first positional data 1 are sent successively, from the lowest bit LSB (L) to the highest bit MSB (M). Next, the second positional data 2 are set, from the lowest bit LSB (L) to the highest bit MSB (M). Finally, a cycle redundancy check (CRC) is sent, and the transmission of one packet is completed.

Here, the "mode command" is a command which prescribes the contents of the data sent; it prescribes the kind of positional data of the encoder, the control commands and data needed to control the encoder and the system, or the presence or absence of the aforementioned CRC. The error bits 1 and 2 are added to check for errors in the various checking functions; if necessary one or the other may be omitted. The CRC is a so-called "redundancy bit"; it is added to improve the data reliability, and may be omitted in some cases. The numbers of bits and clocks needed to transmit the positional data are determined as desired, depending on the nature of the apparatus, etc. Moreover, if necessary, it is possible to transmit additional information following the aforementioned CRC besides the information mentioned above; in this case, a CRC is also added to the additional information.

In the sending and receiving apparatus, the data length (bit length) of the positional data are discriminated; therefore, if the positional data are divided (partitioned) by specific bits, the positional data 1 and 2 can be easily obtained. Furthermore, any of the data mentioned above may be allotted to the positional data 1 and 2 at will.

Since the positional data of two encoders (detectors) can be combined into one set of data by a comparatively simple constitution, in this case, the number of encoders can be increased without making large changes in the existing system, and a system with high performance, high resolution, and high function can be obtained with slight changes.

### Working Example 2

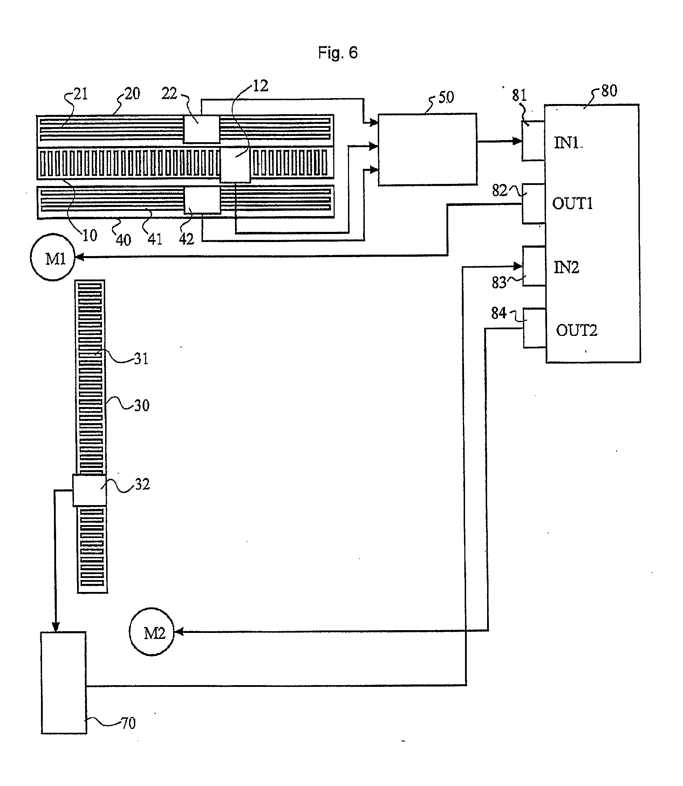

Next, a second working example of this invention will be explained. Fig. 6 is a block drawing which shows a second example of the constitution of the system which uses the signal processing apparatus of this invention. In this example, an example is shown in which, besides the main scale 10 which measures the quantity of movement of a device in the X direction, a sub-scale which measures the quantity of movement in the Y direction, orthogonal to the X direction, is added, and a sub-scale 40 for detection in the Z direction, orthogonal to the X and Y directions, is also provided.

Moreover, an encoder head 42 is provided for the sub-scale 40, in the same way as for the main scale 10, and the detected signals are sent to the signal processor 50 in the same manner as for the main scale. Therefore, three systems of output signals are inputted from the main scale 10, the sub-scale 20, and the sub-scale 40. The data signals from the encoder heads 12, 22, and 42, which are the detectors of these three systems, are synthesized in the signal processor 50 and converted into a serial signal in the same way as in Working Example 1, as a single synthesized data signal, as shown in Fig. 7. Furthermore, the order of the synthesized data signals may be determined in any way one wishes. In the other constitutions, the constituent elements which are the same as in Working Example 1 are given the same numbers, and their explanation is omitted.

In this way, the data can be easily accommodated even when the data detected in the control of the X axis are increased to three systems. Furthermore, the control of an X-Y table was explained by examples in the aforementioned working examples, but this invention is not limited to this kind of constitution; control in a single direction is possible, and various modifications and applications may be made. Moreover, the sub-scales added to the main scale may not only be used for the Y and Z directions, but they may be made into multiple systems, in which the detection of other directional components is added, such as vibration forward and backward in the direction of travel. More precise measurements are possible by detection displacements with many directional components.

This invention is used to obtain positional information of measuring, machining, and processing equipment, etc. If encoders of types which can read the positional detection patterns linked to the symbol patterns or electromagnetic induction of symbol boards and scales, it can be applied to linear encoders as well as rotary encoders and to incremental as well as absolute types, using optical, magnetic, or induction methods.

### Explanation of Symbols:

- 10: Scale (X-axis main scale)
- 11: Pattern
- 12: Encoder head
- 20: Scale (Y-direction sub-scale)
- 21: Pattern
- 22: Encoder head
- 30: Scale (Y-direction main scale)
- 31: Pattern
- 32: Encoder head
- 40: Scale (Z-direction sub-scale)
- 41: Pattern
- 42: Encoder head
- 50: Signal processing apparatus
- 51, 52n: A/D conversion encoder parts
- 53, 54n: Parallel/serial conversion parts
- 55: Signal synthesis part
- 56: Data sending and receiving part
- 70: Encoded signal

## Claims

1. A measuring system comprising a signal processing apparatus (50) and encoders for measuring quantities of movement or displacement, adapted to convert the detection signals (IN1, ..., INn) from a plurality of encoders into serial data signals, synthesize the plurality of data signals obtained, and transmit them to an external apparatus as one synthesized data signal, **characterized in that** said plurality of encoders have main scales (10, 30) adapted to measure the quantities of movement in the main measurement directions and subscales (20, 40) adapted to detect minute displacements in the directions orthogonal to said main measurement directions.

2. A measuring system according to Claim 1, in which the aforementioned synthesized data signals consist of a plurality of data signals which are joined together and arranged consecutively.

3. A measuring system according to any of Claims 1 or 2, which has a plurality of data signal converting parts (51, ..., 52n) adapted to convert the detection signals into data signals; a plurality of serial signal producing parts (53, ..., 54n) adapted to convert the data signals from the data signal converting parts into serial signals; a signal synthesizing (55) part adapted to synthesize the data signals from said serial signal producing parts; and a signal transmission part (56) adapted to transmit the serial data signals synthesized in said signal synthesizing part to an external apparatus.

## Patentansprüche

1. Messsystem, umfassend
eine Signalverarbeitungsvorrichtung (50) und Codierer zum Messen von Bewegungs- oder Verschiebungsgrößen, die ausgelegt ist, die Detektionssignale (IN1, ..., INn) mehrerer Codierer in serielle Datensignale umzuwandeln, die mehreren erhaltenen Datensignale zu synthetisieren und diese als ein synthetisiertes Datensignal an eine externe Vorrichtung zu senden, **dadurch gekennzeichnet, dass** die mehreren Codierer Hauptskalen (10, 30) aufweisen, die dafür ausgelegt sind, die Bewegungsgrößen in den Hauptmessrichtungen zu messen, und Unterskalen (20, 40), die dafür ausgelegt sind, geringe Verschiebungen orthogonal in den Richtungen zu den Hauptmessrichtungen zu detektieren.

2. Messsystem nach Anspruch 1, bei dem die zuvor erwähnten synthetisierten Datensignale aus mehreren Datensignalen bestehen, die zusammengefügt und nacheinander angeordnet sind.

3. Messsystem nach einem der Ansprüche 1 oder 2, das mehrere Datensignalumwandlungsteile (51, ..., 52n) aufweist, die dafür ausgelegt sind, die Detektionssignale in Datensignale umzuwandeln; mehrere Serielle-SignalErzeugungsteile (53, ..., 54n), die ausgelegt sind, die Datensignale von den Datensignalumwandlungsteilen in serielle Signale umzuwandeln; ein Signalsynthetisierungsteil (55), das ausgelegt ist, die Datensignale von den Serielle-SignalErzeugungsteilen zu synthetisieren; und ein Signalsendeteil (56), das ausgelegt ist zum Senden der in dem Signalsynthetisierungsteil synthetisierten seriellen Daten zu einer externen Vorrichtung.

## Revendications

1. Système de mesure comprenant un appareil de traitement de signaux (50) et des codeurs pour mesurer des quantités de mouvement ou de déplacement, lequel est conçu pour convertir les signaux de détection (IN1, ..., INn) depuis plusieurs codeurs en signaux de données série, synthétiser lesdits plusieurs signaux de données obtenus, et les transmettre vers un appareil externe sous forme d'un signal de données synthétisé, **caractérisé en ce que** lesdits plusieurs codeurs possèdent des échelles principales (10, 30) conçues pour mesurer les quantités de mouvement dans les directions de mesure principales, et des sous-échelles (20, 40) conçues pour détecter des déplacements minuscules dans les directions orthogonales aux directions de mesure principales.

2. Système de mesure selon la revendication 1, dans lequel les signaux de données synthétisés susmentionnés comprennent plusieurs signaux de données qui sont joints les uns aux autres et agencés de manière consécutive.

3. Système de mesure selon l'une quelconque des revendications 1 ou 2, lequel comprend plusieurs parties de conversion de signaux de données (51, ..., 52n) conçues pour convertir les signaux de détection en signaux de données, plusieurs parties de production de signaux série (53, ..., 54n) conçues pour convertir les signaux de données provenant des parties de conversion de signaux de données en signaux série, une partie de synthèse de signaux (55) conçue pour synthétiser les signaux de données provenant des parties de production de signaux série, et une partie de transmission de signaux (56) conçue pour transmettre les signaux de données série synthétisés dans la partie de synthèse de signaux vers un appareil externe.
